# EUROPEAN PATENT APPLICATION

(11) **EP 4 362 292 A1**
(43) Date of publication of application: **01.05.2024**
(21) Application number: 22828009.5
(22) Date of filing: 24.03.2022
(51) Int. Cl.: H02K 5/20, H02K 7/116

(54) **MOTOR, MOTOR UNIT, VEHICLE-DRIVING MOTOR UNIT, AND ELECTRIC VEHICLE**

(30) Priority: 21.06.2021 JP 2021102791
(71) Applicant: Yamaha Hatsudoki Kabushiki Kaisha, Iwata-shi, Shizuoka 438-8501 (JP)
(72) Inventor: KAMICHIKA, Takuro, Iwata-shi, Shizuoka 438-8501 (JP); KUROSAWA, Shinichi, Iwata-shi, Shizuoka 438-8501 (JP); TANINO, Shogo, Iwata-shi, Shizuoka 438-8501 (JP)
(74) Representative: Stöckeler, Ferdinand
(86) International application number: PCT/JP2022/014123
(87) International publication number: WO 2022/270090

(57) **Abstract**

A vehicle driving motor unit 5 of an electric vehicle 1 includes motor units 10a, 10b. The motor units 10a, 10b include motors 12a, 12b, each including a rotor 40 having an oil path 164; a second motor cover 24 including oil paths 146, 152 communicatable with an outward oil path 34; and a cover 90 including an oil path 160 between oil paths 164, 146, and an oil path 162 between the oil paths 164, 152. In the motor 12a, the oil paths 146, 160 communicate with each other via a gasket 92a. The oil paths 146, 152 have their respective open ends communicating with an exit-side end portion of the pipe 32 and an inlet-side end portion of the pipe 36. In the motor 12b, the oil paths 152, 162 communicate with each other via a gasket 92b. The oil paths 146, 152 have their respective open ends communicating with an inlet-side end portion of the pipe 36 and an exit-side end portion of the pipe 32.

## Description

### TECHNICAL FIELD

The present invention relates to motors, motor units, vehicle driving motor units and electric vehicles, and more specifically to an oil-cooled motor, a motor unit, a vehicle driving motor unit and an electric vehicle.

### BACKGROUND ART

As an example which is pertinent to conventional techniques of this kind, Patent Literature 1 discloses a driving apparatus. The driving apparatus includes a motor having a rotor and a stator placed radially outside the rotor; a housing which houses the motor; and a cooling medium flow path passing inside the housing and allowing a cooling medium. The housing has an inner circumferential surface, the stator has an outer circumferential surface, and the surfaces are radially opposed to each other. The cooling medium flow path includes an injection hole for injection of the cooling medium between the housing's inner circumferential surface and the stator's outer circumferential surface, and a guide flow path located between the housing's inner circumferential surface and the stator's outer circumferential surface. The guide flow path is a groove which is at least in one of the housing's inner circumferential surface and the stator's outer circumferential surface, extending in a circumferential direction.

### CITATION LIST

### PATENT LITERATURE

Patent Literature 1: JP-A 2021-52523

### SUMMARY OF INVENTION

### TECHNICAL PROBLEM

Patent Literature 1 does not show sufficient consideration into cases where the driving apparatuses are used in side-by-side layout.

Therefore, a primary object of the present invention is to provide a motor which can be used suitably in a side-by-side layout, and a motor unit, a vehicle driving motor unit and an electric vehicle including the same.

### SOLUTION TO PROBLEM

According to an aspect of the present invention, there is provided a motor which includes a case having a stator housing, a first motor cover provided at an output side end portion of the stator housing, and a second motor cover provided at a non-output side end portion of the stator housing; a first pipe having an outward oil path and held by the first motor cover and the second motor cover; a second pipe having a return oil path, provided at a lower position than the first pipe and held by the first motor cover and the second motor cover; a rotor provided inside the case and having a first oil path; a stator provided inside the case and having a stator core provided radially outside the rotor and a stator coil provided in the stator core; a cover provided outside the second motor cover; and a gasket inserted between the second motor cover and the cover. The second motor cover includes a second oil path and a third oil path communicatable with the outward oil path. The cover includes a fourth oil path provided between the first oil path and the second oil path, and a fifth oil path provided between the first oil path and the third oil path. The gasket has a through-hole enabling either one of communication between the second oil path and the fourth oil path, or communication between the third oil path and the fifth oil path. The second oil path has an open end and the third oil path has an open end, respectively communicating with one and the other of an exit-side end portion of the first pipe and an inlet-side end portion of the second pipe.

The present invention is suitable for a case where two motors are used in a side-by-side layout. In this arrangement, a first one of the motors is disposed so that its second oil path is at a higher position than the third oil path, the first pipe has its exit-side end portion communicating with the open end of the second oil path, and the second pipe has its inlet-side end portion communicating with the open end of the third oil path. The gasket inserted between the second motor cover and the cover provides communication between the second oil path and the fourth oil path via the through-hole but blocks communication between the third oil path and the fifth oil path. Therefore, oil from the outward oil path of the first pipe is supplied into the case via the second oil path of the second motor cover, the fourth oil path of the cover and the first oil path of the rotor. In this process, oil does not flow from the third oil path to the fifth oil path. In a second one of the motors, the stator housing and the second motor cover of the first motor are rotated by 180 degrees (flipped upside down), and the first pipe and the second pipe are swapped with each other. In other words, the second motor is disposed so that its third oil path is at a higher position than the second oil path, the first pipe has its exit-side end portion communicating with the open end of the third oil path, and the second pipe has its inlet-side end portion communicating with the open end of the second oil path. The gasket provides communication between the third oil path and the fifth oil path via the through-hole but blocks communication between the second oil path and the fourth oil path. Therefore, oil from the outward oil path is supplied into the case via the third oil path of the second motor cover, the fifth oil path of the cover and the first oil path of the rotor. In this process, oil does not flow from the second oil path to the fourth oil path. As described, it is possible, by means of the gasket, to change an oil route from the outward oil path to the first oil path so that the route is provided by the oil path which is on a gravitationally upper side, making it possible to suitably use the two motors in a side-by-side layout.

Preferably, the second motor cover further includes a sixth oil path and a seventh oil path communicatable with the outward oil path for supplying oil to the stator coil. The sixth oil path is provided near the second oil path, and the seventh oil path is provided near the third oil path. In this case, in the first motor, oil from the outward oil path is smoothly supplied to the stator coil via the sixth oil path of the second motor cover, while in the second motor, oil from the outward oil path is smoothly supplied to the stator coil via the seventh oil path of the second motor cover. As described, it is possible to make switching between the two oil paths to the stator coil, and it is possible smoothly to supply oil to the stator coil, too.

Further, preferably, the motor further includes a branching piece provided inside the second motor cover for dividing the oil from the outward oil path to the second and sixth oil paths, or to the third and seventh oil paths. In this case, in the first motor, the branching piece is attached between the outward oil path and the second and sixth oil paths, whereby it is possible to easily divide oil from the outward oil path to the second oil path and to the sixth oil path. In the second motor, the branching piece is attached between the outward oil path and the third and seventh oil paths, whereby it is possible to easily divide oil from the outward oil path to the third oil path and to the seventh oil path.

Further, preferably, the respective open ends of the second oil path and the third oil path are in point symmetry to each other with respect to an axis of the rotor when viewed axially along the rotor. In this case, even if the motor is rotated by 180 degrees (flipped upside down), it is possible to supply oil into the case from a similar position.

There is provided a motor unit including the above described motor, and a speed reducer provided on a side of the first motor cover in order to slow down rotation of the rotor and communicating with the return oil path.

In the present invention, it is possible to smoothly supply oil to the speed reducer.

There is provided a vehicle driving motor unit including a plurality of the above-described motor units in which the stator housings, the second motor covers and the covers in all of the motors are respectively provided by identical members.

In the present invention, all of the motors, and therefore all of the motor units, use identical stator housings, second motor covers and covers. Therefore, it is possible to easily obtain a vehicle driving motor unit including a plurality of the motor units.

The vehicle driving motor unit described above can be suitably utilized in an electric vehicle.

It should be noted here that in the present invention, "output side end portion of the stator housing" refers to an axial end portion of the stator housing from which the motor output is taken off.

"Non-output side end portion of the stator housing" refers to an axial end portion of the stator housing from which the motor output is not taken off (an axial end portion on a side away from the output side end portion).

### ADVANTAGEOUS EFFECTS OF INVENTION

The present invention provides a motor which can be suitably used in a side-by-side layout, and a motor unit, a vehicle driving motor unit and an electric vehicle including the same.

### BRIEF DESCRIPTION OF DRAWINGS

Fig. 1 is a perspective view which shows a vehicle according to an embodiment of the present invention.
Fig. 2 is a perspective view which shows a vehicle driving motor unit included in the vehicle in Fig. 1.
Fig. 3 is a front perspective view which shows a first motor unit included in the vehicle driving motor unit in Fig. 2.
Fig. 4 is a rear perspective view which shows the motor unit in Fig. 3.
Fig. 5 is a right side view which shows the motor unit in Fig. 3.
Fig. 6 is a left side view which shows the motor unit in Fig. 3.
Fig. 7 is an illustrative sectional view which shows the motor unit in Fig. 3.
Fig. 8 is a plan view which shows a gasket included in the motor unit in Fig. 3.
Fig. 9 is a front perspective view which shows a second motor unit included in the vehicle driving motor unit in Fig. 2.
Fig. 10 is a rear perspective view which shows the motor unit in Fig. 9.
Fig. 11 is a left side view which shows the motor unit in Fig. 9.
Fig. 12 is a right side view which shows the motor unit in Fig. 9.
Fig. 13 is an illustrative sectional view which shows the motor unit in Fig. 9.
Fig. 14 is a plan view which shows a gasket included in the motor unit in Fig. 9.

### DESCRIPTION OF EMBODIMENTS

Hereinafter, embodiments of the present invention will be described with reference to the drawings.

In the drawings, "Fr" indicates forward, "Rr" indicates rearward, "R" indicates rightward, "L" indicates leftward, "U" indicates upward and "Lo" indicates downward.

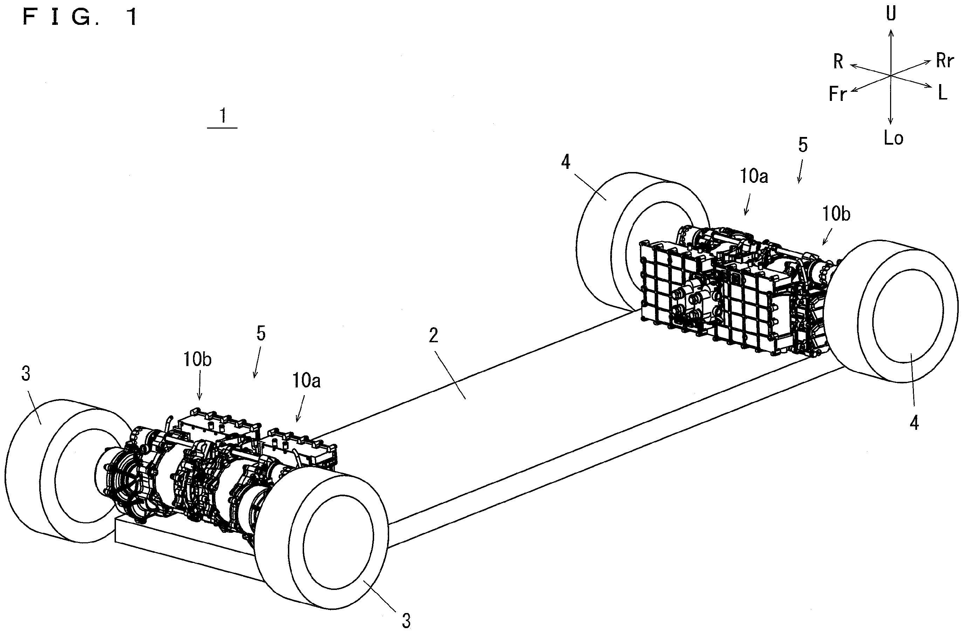

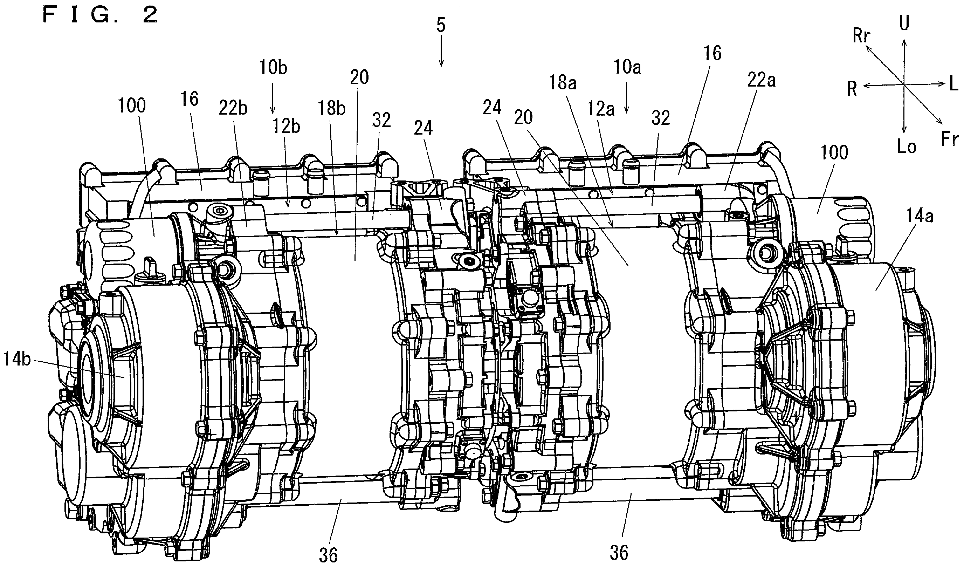

Referring to Fig. 1, an electric vehicle 1 according to an embodiment of the present invention includes a body 2, a pair of front wheels 3, a pair of rear wheels 4, a vehicle driving motor unit 5 provided between the pair of front wheels 3 at a front portion of the body 2, and a vehicle driving motor unit 5 provided between the pair of rear wheels 4 at a rear portion of the body 2. The pair of front wheels 3 and the pair of rear wheels 4 are driven by a respective one of the vehicle driving motor units 5. Referring also to Fig. 2, the vehicle driving motor unit 5 includes motor units 10a, 10b which are placed side by side.

As shown in Fig. 1, the vehicle driving motor unit 5 provided between the pair of front wheels 3, and the vehicle driving motor unit 5 provided between the pair of rear wheels 4 have an identical structure although their front and back are reversed. Therefore, a description herein will be made for the vehicle driving motor unit 5 provided between the pair of front wheels 3, and a description for the vehicle driving motor unit 5 provided between the pair of rear wheels 4 will be skipped.

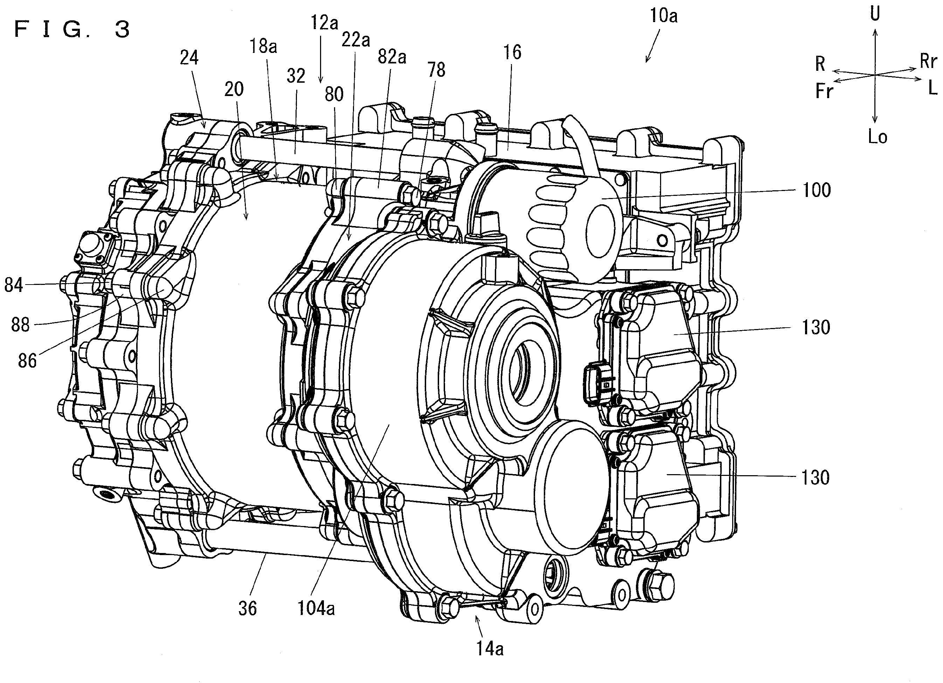

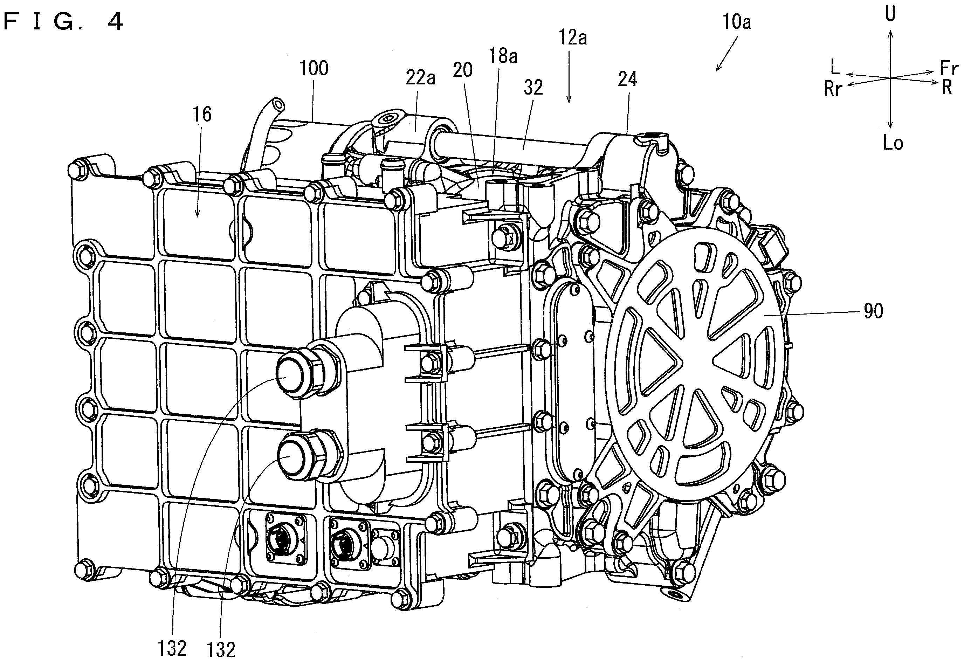

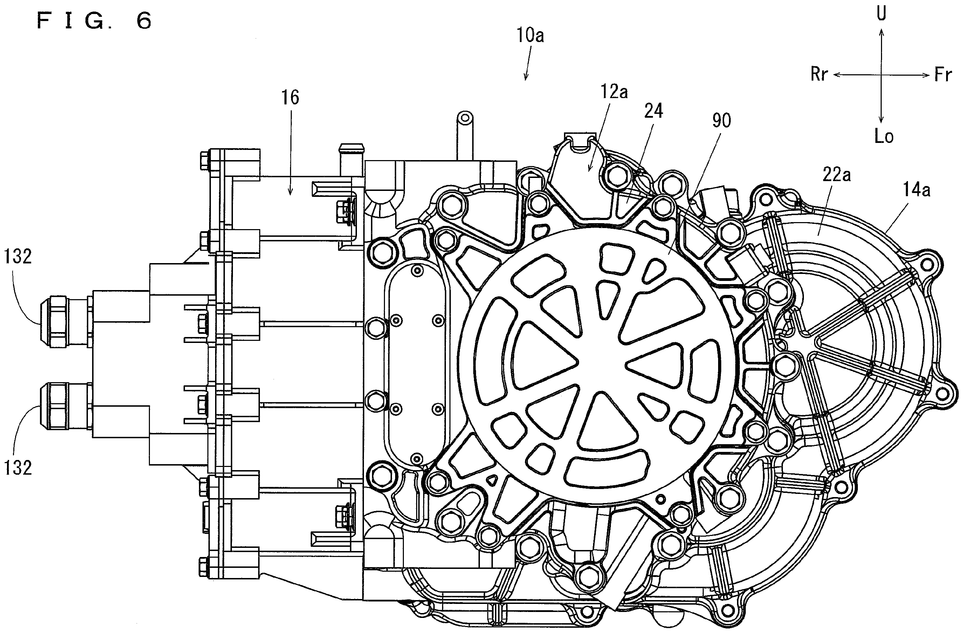

Referring to Fig. 3 through Fig. 6, the motor unit 10a is a mechatronic integrated unit including a motor 12a, a speed reducer 14a, and an inverter 16. The speed reducer 14a is provided on a side (left side in the present embodiment) of the motor 12a, while the inverter 16 is provided behind the motor 12a and the speed reducer 14a.

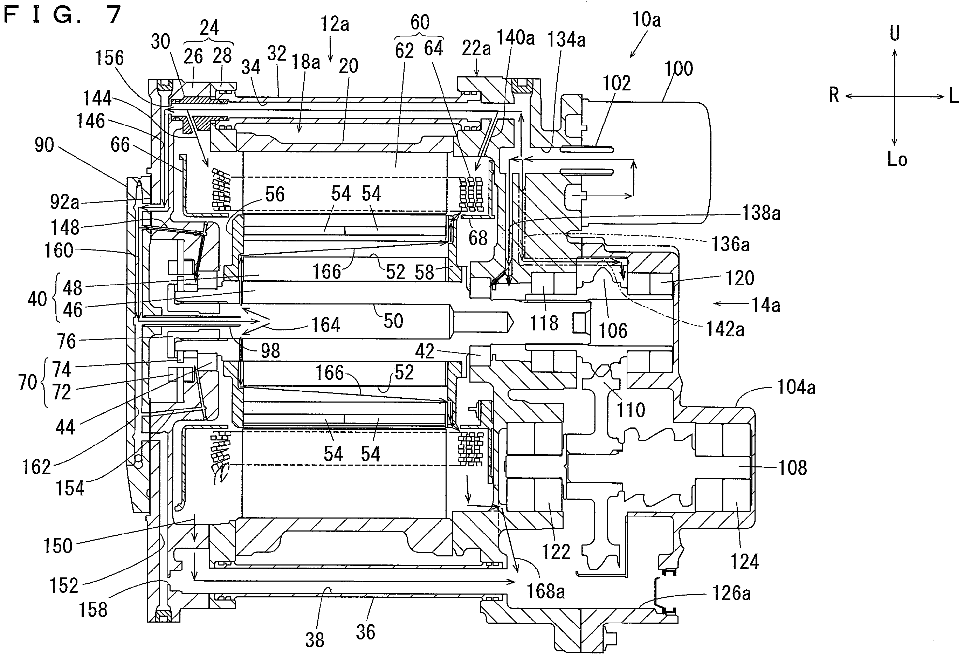

Referring also to Fig. 7, the motor 12a includes a case 18a. The case 18a has a three-tier structure, and includes a stator housing 20, a first motor cover 22a provided at an output side end portion of the stator housing 20, and a second motor cover 24 provided at a non-output side end portion of the stator housing 20. The second motor cover 24 includes a cover main body 26, and a pipe holder 28 attached to the cover main body 26. A branching piece 30 is provided between the cover main body 26 and the pipe holder 28.

Outside the stator housing 20, there is provided a first externally attached pipe 32 held by the first motor cover 22a and the second motor cover 24. The first externally attached pipe 32 is a separate member from the stator housing 20, provided slightly spaced away from the stator housing 20, and sandwiched by the first motor cover 22a and the second motor cover 24. The first externally attached pipe 32 has an outlet side end portion, which is held by the pipe holder 28 and is connected with the branching piece 30. Inside the first externally attached pipe 32, there is formed an outward oil path 34 which provides communication between the first motor cover 22a and the second motor cover 24. Also, outside the stator housing 20, at a position lower than the first externally attached pipe 32, there is provided a second externally attached pipe 36 held by the first motor cover 22a and the second motor cover 24. The second externally attached pipe 36 is a separate member from the stator housing 20, provided slightly spaced away from the stator housing 20, and sandwiched by the first motor cover 22a and the second motor cover 24. The second externally attached pipe 36 has an inlet side end portion, which is held by the pipe holder 28. Inside the second externally attached pipe 36, there is formed a return oil path 38 which provides communication between the first motor cover 22a and the second motor cover 24. The return oil path 38 is provided at a lower position than the outward oil path 34. Preferably, the outward oil path 34 has a smaller sectional area than the return oil path 38. In other words, preferably, an inner diameter of the first externally attached pipe 32 is smaller than an inner diameter of the second externally attached pipe 36.

A rotor 40 is provided inside the case 18. The rotor 40 is held rotatably by the first motor cover 22a and the second motor cover 24 via motor bearings 42, 44. The rotor 40 includes a rotor shaft 46 and a rotor core 48. The rotor shaft 46 has an axially extending hollow portion 50. The rotor core 48 has a plurality of rotor core holes 52 and a plurality of magnets 54. End plates 56, 58 are disposed at two axial end portions of the rotor core 48.

Inside the case 18, a stator 60 is provided radially outside the rotor 40. The stator 60 includes a stator core 62 which is provided radially outside the rotor 40 and is fixed to the stator housing 20, and a stator coil 64 which is wound around the stator core 62. The stator core 62 is fixed to the stator housing 20 by means of shrink fit. Coil end covers 66, 68 are provided to cover two axial end portions of the stator coil 64, i.e., to cover the coil ends.

Between the second motor cover 24 and the rotor shaft 46, there is provided a resolver 70 for detection of a rotating angle of the rotor shaft 46. The resolver 70 includes a resolver stator 72 which is attached to the second motor cover 24, and a resolver rotor 74 which is attached to the rotor shaft 46. The resolver rotor 74 is fixed to a rear end portion of the rotor shaft 46 by a bolt 76 which has a generally hat-like section.

Referring to Fig. 3, the stator housing 20 and the first motor cover 22a are connected with each other by a plurality of bolts 78. Each bolt 78 is threaded into a boss 80 which is provided on an output side end portion in an outer circumferential surface of the stator housing 20 and a boss 82a which is provided on an outer circumferential portion of the first motor cover 22a. The stator housing 20 and the second motor cover 24 are connected to each other with a plurality of bolts 84. Each bolt 84 is threaded into a boss 86 which is provided on a non-output side end portion in an outer circumferential surface of the stator housing 20 and a boss 88 which is provided on an outer circumferential portion of the second motor cover 24.

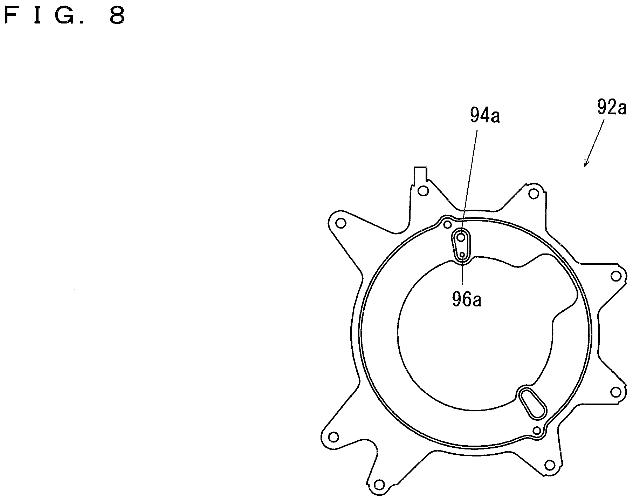

Referring to Fig. 7, a cover 90 is provided on a side of the second motor cover 24. A gasket 92a is placed between the second motor cover 24 and the cover 90. Referring to Fig. 8, the gasket 92a is formed in a generally annular shape, and has through-holes 94a, 96a for communication between oil paths. A pipe 98 extending into the hollow portion 50 of the rotor shaft 46 is attached at a center portion of the cover 90.

In an outer surface of the first motor cover 22a, an oil filter 100 is provided for filtration of oil which is to be supplied into the case 18. The oil filter 100 is supplied with oil from an oil cooler (not illustrated) provided outside the motor unit 10a. The oil cooler is shared by the motor unit 10a and the motor unit 10b. The oil filter 100 and the first motor cover 22a are connected with each other by a union bolt 102.

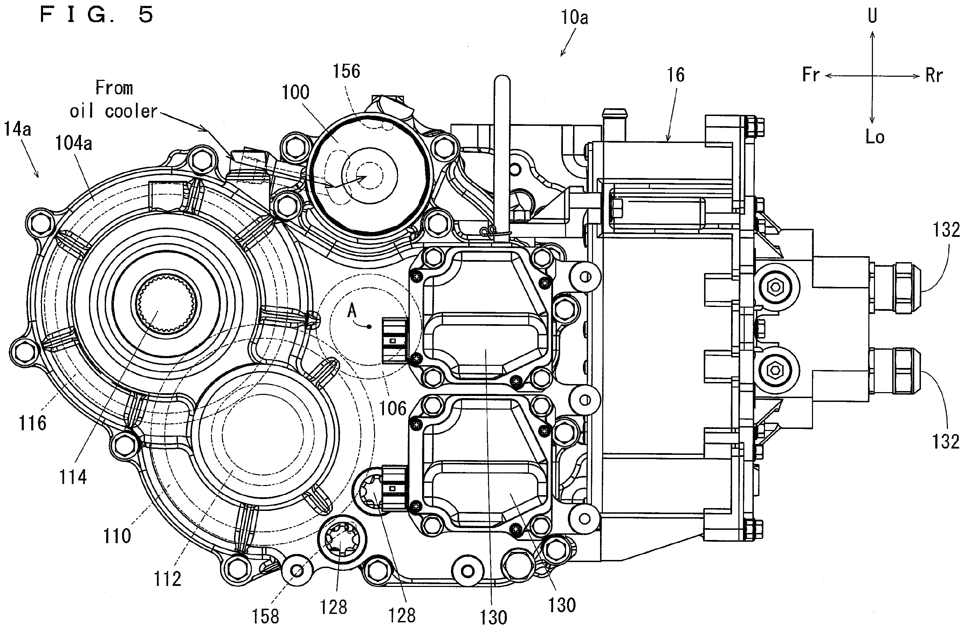

The speed reducer 14a is provided on a side (left side in the present embodiment) of the first motor cover 22a in order to slow down rotation of the rotor. The speed reducer 14a includes a gear cover 104a provided on a side of the first motor cover 22a. Referring to Fig. 5 and Fig. 7, the gear cover 104a is provided therein with an input gear 106, an intermediate shaft 108, intermediate gears 110, 112, an output shaft 114, and an output gear 116. The intermediate shaft 108 and the output shaft 114 are in parallel to the rotor shaft 46. The input gear 106 is attached to a tip portion of the rotor shaft 46, and is supported rotatably by the first motor cover 22a and the gear cover 104a via input gear bearings 118, 120. The intermediate shaft 108 is supported rotatably by the first motor cover 22a and the gear cover 104a via intermediate gear bearings 122, 124. The intermediate gears 110, 112 are both attached to the intermediate shaft 108. The intermediate gear 110 meshes with the input gear 106. The intermediate gear 112 meshes with the output gear 116. The output shaft 114 is supported rotatably by the first motor cover 22a and the gear cover 104a via unillustrated bearings. The output gear 116 is attached to the output shaft 114. The gear cover 104a covers an outer surface of the first motor cover 22a, whereby an oil reservoir 126a which communicates with the return oil path 38 is formed. In other words, the oil reservoir 126a is formed inside the speed reducer 14a. The oil reservoir 126a stores oil from the case 18a and oil from the gear cover 104a.

The gear cover 104a is provided with two oil level gauges 128 for detecting an amount of oil inside the oil reservoir 126a. Also, the gear cover 104a is provided with two oil pumps 130 for supplying oil from inside the oil reservoir 126a to the external oil cooler.

The inverter 16 is connected with a battery (not illustrated) via connecting terminals 132, converts a direct current from the battery into an alternating current, and supplies the current to the motor 12a.

The motor unit 10a described thus far is formed with oil paths as follows:
Referring to Fig. 7, the first motor cover 22a has an oil path 134a communicating with the outward oil path 34 to supply oil from the oil filter 100 to the outward oil path 34, and oil paths 136a, 138a, 140a branching from the oil path 134a. The oil path 136a communicates with an oil path 142a inside the speed reducer 14a, to supply oil to the input gear bearing 120. Oil from the oil path 138a is supplied to the motor bearing 42 and the input gear bearing 118. Oil from the oil path 140a is supplied to the coil end of the stator coil 64. As described, oil is supplied into the case 18a via the oil paths 138a, 140a. Oil from the oil path 134a flows through the outward oil path 34 and is supplied to the second motor cover 24.

The second motor cover 24 has oil paths 144, 146, 148, 150, 152, 154. The oil paths inside the second motor cover 24 are formed generally in symmetry between an upper half and a lower half, with the oil paths 150, 152, 154 corresponding to the oil paths 144, 146, 148 respectively. The oil path 144 is provided near the oil path 146, while the oil path 150 is provided near the oil path 152. When viewed axially along the rotor 40, an open end 156 of the oil path 146 and an open end 158 of the oil path 152 are in point symmetry to each other with respect to an axis A of the rotor 40 (see Fig. 5). In the motor unit 10a, the oil paths 144, 146 communicate with the outward oil path 34 via the branching piece 30. Also, the open end 156 of the oil path 146 communicates with an exit-side end portion of the first externally attached pipe 32 via the branching piece 30, while the open end 158 of the oil path 152 communicates with an inlet-side end portion of the second externally attached pipe 36.

The cover 90 has oil paths 160, 162. The oil paths inside the cover 90 are formed generally in symmetry between an upper half and a lower half. The oil path 160 is provided between an oil path 164 (which will be described later) and the oil path 146, while the oil path 162 is provided between the oil path 164 and the oil path 152.

The gasket 92a enables communication between the oil path 146 and the oil path 160, and between the oil path 160 and the oil path 148 by means of the through-holes 94a, 96a, but disables communication between the oil path 152 and the oil path 162, and between the oil path 162 and the oil path 154.

In the motor unit 10a, the oil paths of the upper halves inside the second motor cover 24 and the cover 90 in the state shown in Fig. 7 are utilized.

Oil which flows through the outward oil path 34 and is supplied to the second motor cover 24 is divided by the branching piece 30, supplied to the coil end of the stator coil 64 via the oil path 144, and sent toward the cover 90 via the oil path 146. The oil path 160 is capable of communicating the oil paths 146 and 148 with each other. In other words, the oil path 146 and the oil path 160 communicate with each other via the through-hole 94a of the gasket 92a, while the oil path 160 and the oil path 148 communicate with each other via the through-hole 96a of the gasket 92a. Therefore, the oil paths 146 and 148 of the second motor cover 24 communicate with each other via the oil path 160 of the cover 90, and oil from the oil path 146 is supplied to the motor bearing 44 and its surroundings via the oil paths 160, 148. Also, the oil path 160 communicates with the oil path 164 inside the hollow portion 50 of the rotor shaft 46 via the pipe 98, and further, communicates with an oil path 166 which leads to the coil end of the stator coil 64, via the rotor core hole 52. Therefore, oil from the oil path 160 is supplied to the coil end of the stator coil 64 via the oil paths 164, 166. As described, oil from the outward oil path 34 is supplied into the case 18a via the second motor cover 24 and the cover 90.

Oil which is supplied to the coil end of the stator coil 64 is then supplied to the oil reservoir 126a via the oil path 150 and the return oil path 38, or via an oil path 168a of the first motor cover 22a. Oil in the oil reservoir 126a is pumped by the two oil pumps 130, supplied to and cooled by the shared oil cooler, and then returned to the oil filter 100.

Next, the motor unit 10b will be described.

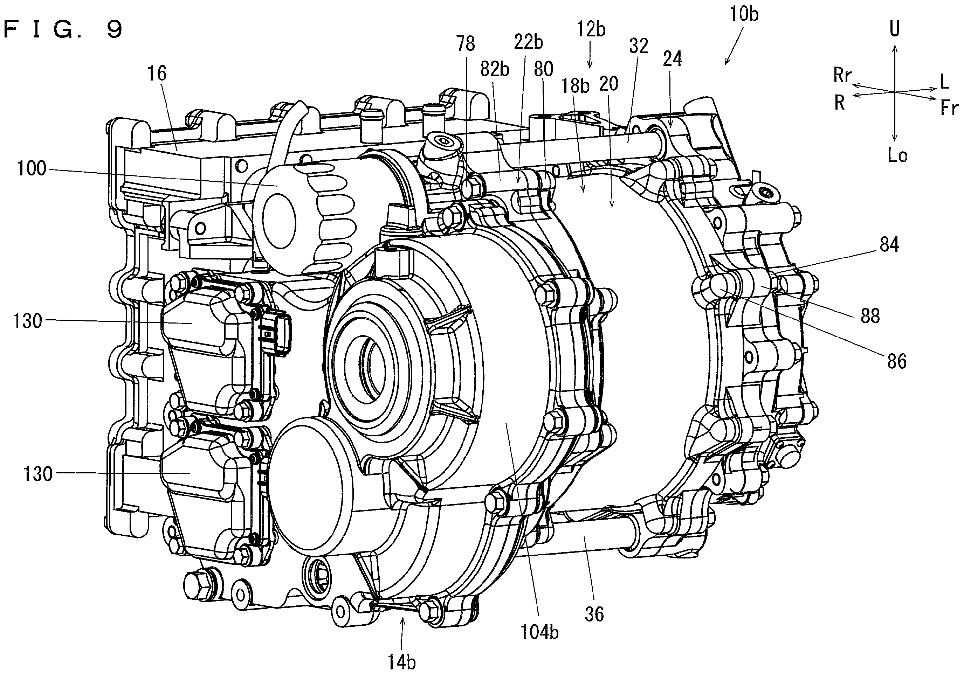

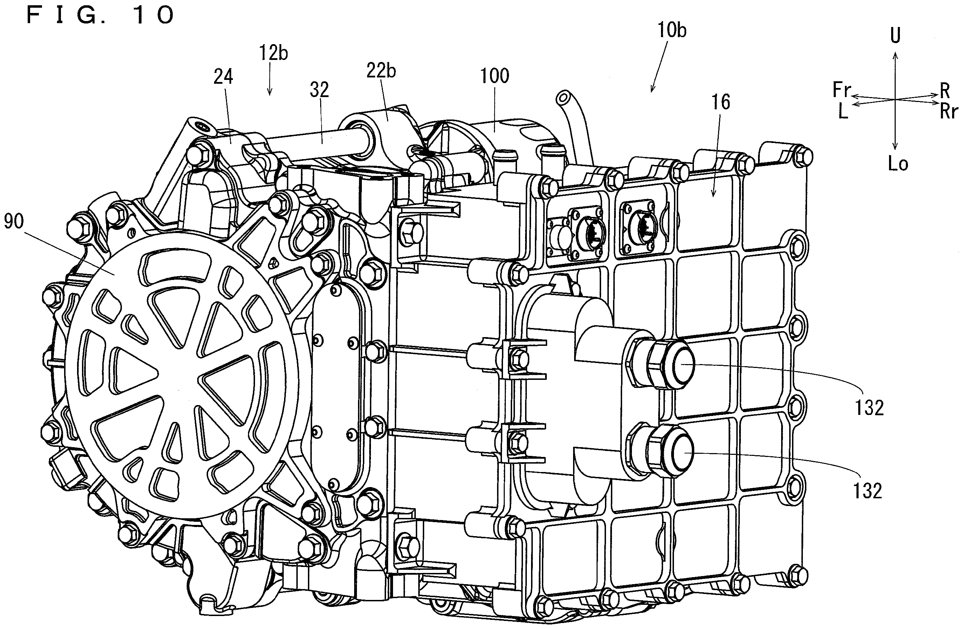

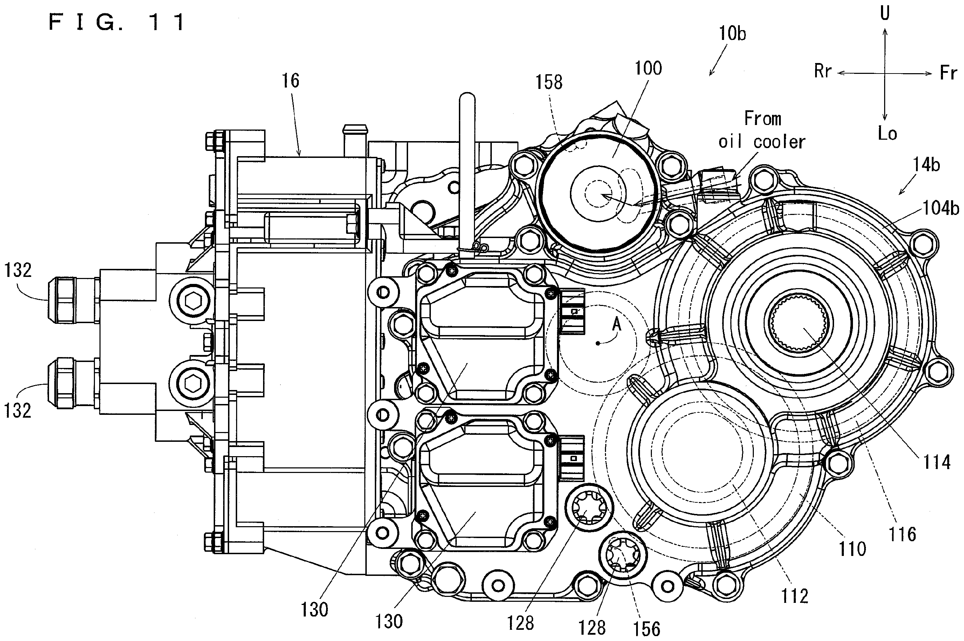

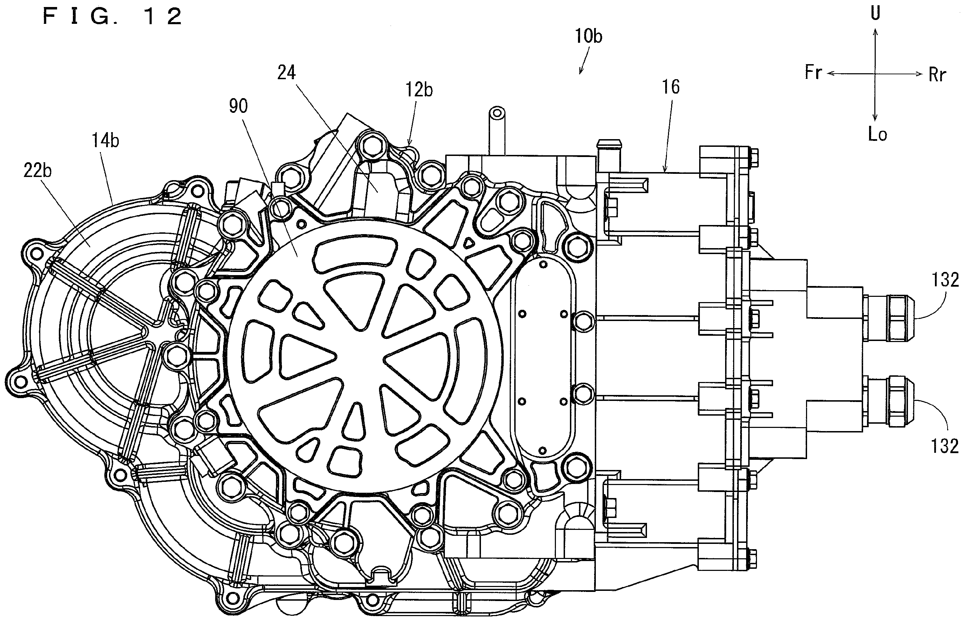

Referring to Fig. 2, the motor unit 10a and the motor unit 10b are configured generally in left-right symmetry, with the motor unit 10b being configured in a similar fashion as the motor unit 10a. With this arrangement in mind, as shown in Fig. 9 through Fig. 14, members in the motor unit 10b which are identical with those in the motor unit 10a are given identical reference symbols with those in the motor unit 10a, while members which are similar to those in the motor unit 10a are given the same reference symbols with those in the motor unit 10a, except that their suffix "a" at the end of each reference symbol changed to "b", and no repetitive description will be repeated here. Specifically, in the motor unit 10b, an inverter 16, a stator housing 20, a second motor cover 24, a branching piece 30, a first externally attached pipe 32, a second externally attached pipe 36, a rotor 40, a stator 60, a cover 90, an oil filter 100, oil pumps 130, etc. are identical with those included in the motor unit 10a.

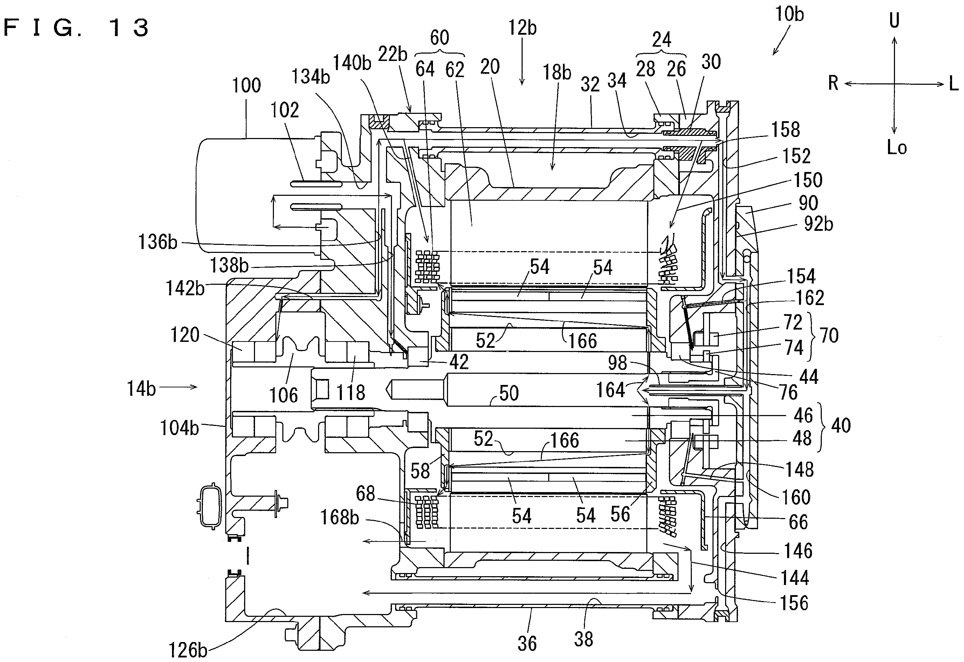

As understood from Fig. 7 and Fig. 13, in the motor unit 10b, the stator housing 20 and the second motor cover 24 of the motor unit 10a are rotated by 180 degrees (flipped upside down), and the first externally attached pipe 32 and the branching piece 30 are swapped with the second externally attached pipe 36, and further, the first motor cover 22a and the speed reducer 14a are replaced with a first motor cover 22b and a speed reducer 14b.

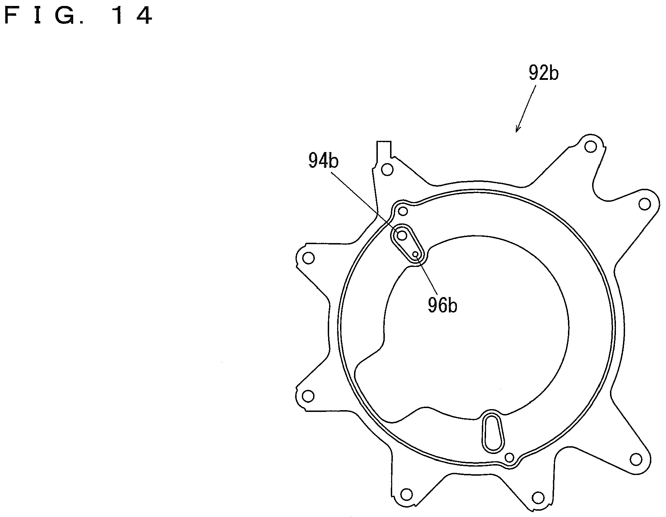

Referring to Fig. 14, a gasket 92b inserted between the second motor cover 24 and the cover 90 is formed in a generally annular shape, and has through-holes 94b, 96b for communication between oil paths. In other words, the gasket 92b enables communication between the oil path 152 and the oil path 162, and between the oil path 162 and the oil path 154 by means of the through-holes 94b, 96b, but disables communication between the oil path 146 and the oil path 160, and between the oil path 160 and the oil path 148.

In the motor unit 10b, the oil paths 150, 152 communicate with the outward oil path 34 via the branching piece 30. Also, the open end 158 of the oil path 152 communicates with an exit-side end portion of the first externally attached pipe 32 via the branching piece 30, while the open end 156 of the oil path 146 communicates with an inlet-side end portion of the second externally attached pipe 36.

In the motor unit 10b, the oil paths inside the second motor cover 24 and the upper half of the cover 90 in the state shown in Fig. 13 are utilized.

Oil which flows through the outward oil path 34 and is supplied to the second motor cover 24 is divided by the branching piece 30, supplied to the coil end of the stator coil 64 via the oil path 150, and sent toward the cover 90 via the oil path 152. The oil path 162 is capable of communicating the oil paths 152 and 154 with each other. In other words, the oil path 152 and the oil path 162 communicate with each other via the through-hole 94b of the gasket 92b, while the oil path 162 and the oil path 154 communicate with each other via the through-hole 96b of the gasket 92b. Therefore, the oil paths 152 and 154 of the second motor cover 24 communicate with each other via the oil path 162 of the cover 90, and oil from the oil path 152 is supplied to the motor bearing 44 and its surroundings via the oil paths 162, 154. Also, the oil path 162 communicates with the oil path 164 inside the hollow portion 50 of the rotor shaft 46 via the pipe 98, and further, communicates with the oil path 166 which leads to the coil end of the stator coil 64, via the rotor core hole 52. Therefore, oil from the oil path 162 is supplied to the coil end of the stator coil 64 via the oil paths 164, 166. As described, oil from the outward oil path 34 is supplied into the case 18b via the second motor cover 24 and the cover 90.

Oil which is supplied to the coil end of the stator coil 64 is then supplied to an oil reservoir 126b via the oil path 144 and the return oil path 38, or via an oil path 168b of the first motor cover 22b. Oil in the oil reservoir 126b is pumped by the two oil pumps 130, supplied to and cooled by the shared oil cooler, and then returned to the oil filter 100.

In the present embodiment, the first externally attached pipe 32 represents the first pipe. The second externally attached pipe 36 represents the second pipe. The oil path 164 represents the first oil path. The oil path 146 represents the second oil path. The oil path 152 represents the third oil path. The oil path 160 represents the fourth oil path. The oil path 162 represents the fifth oil path. The oil path 144 represents the sixth oil path. The oil path 150 represents the seventh oil path.

According to the vehicle driving motor unit 5, or the electric vehicle 1 at large, two motors 12, 12b, or the motor units 10a, 10b at large are used in a side-by-side layout. In this arrangement, a first one of the motors, i.e., the motor 12a is disposed so that the oil path 146 is at a higher position than the oil path 152, the first externally attached pipe 32 has its exit-side end portion communicating with the open end 156 of the oil path 146, and the second externally attached pipe 36 has its inlet-side end portion communicating with the open end 158 of the oil path 152. The gasket 92a inserted between the second motor cover 24 and the cover 90 provides communication between the oil path 146 and the oil path 160 via the through-hole 94a but blocks communication between the oil path 152 and the oil path 162. Therefore, oil from the outward oil path 34 of the first externally attached pipe 32 is supplied into the case 18a via the oil path 146 of the second motor cover 24, the oil path 160 of the cover 90 and the oil path 164 of the rotor 40. In this process, oil does not flow from the oil path 152 to the oil path 162. In a second one of the motors, i.e., in the motor 12b, the stator housing 20 and the second motor cover 24 of the first motor 12a are rotated by 180 degrees (flipped upside down), and the first externally attached pipe 32 and the second externally attached pipe 36 are swapped with each other. In other words, the second motor 12b is disposed so that the oil path 152 is at a higher position than the oil path 146, the first externally attached pipe 32 has its exit-side end portion communicating with the open end 158 of the oil path 152, and the second externally attached pipe 36 has its inlet-side end portion communicating with the open end 156 of the oil path 146. The gasket 92b provides communication between the oil path 152 and the oil path 162 via the through-hole 94b but blocks communication between the oil path 146 and the oil path 160. Therefore, oil from the outward oil path 34 is supplied into the case 18b via the oil path 152 of the second motor cover 24, the oil path 162 of the cover 90 and the oil path 164 of the rotor. In this process, oil does not flow from the oil path 146 to the oil path 160. As described, it is possible, by means of the gaskets 92a, 92b, to change an oil route from the outward oil path 34 to the oil path 164 so that the route is provided by the oil path which is on a gravitationally upper side, making it possible to suitably use the two motors 12a, 12b in a side-by-side layout.

In the first motor 12a, oil from the outward oil path 34 is smoothly supplied to the stator coil 64 via the oil path 144 of the second motor cover 24, while in the second motor 12b, oil from the outward oil path 34 is smoothly supplied to the stator coil 64 via the oil path 150 of the second motor cover 24. As described, it is possible to make switching between the two oil paths to the stator coil 64, and it is possible to smoothly supply oil to the stator coil 64, too.

In the first motor 12a, the branching piece 30 is attached between the outward oil path 34, and the oil path 146 and the oil path 144, whereby it is possible to easily divide oil from the outward oil path 34 to the oil path 146 and to the oil path 144. In the second motor 12b, the branching piece 30 is attached between the outward oil path 34, and the oil path 152 and the oil path 150, whereby it is possible to easily divide oil from the outward oil path 34 to the oil path 152 and to the oil path 150.

When viewed axially along the rotor 40, the open end 156 of the oil path 146 and the open end 158 of the oil path 152 are in point symmetry with respect to the axis A of the rotor 40. Therefore, even if the motor is rotated by 180 degrees (flipped upside down), it is possible to supply oil into the cases 18a, 18b from a similar position. Also, the positional relationship between the branching piece 30 connected with the open end 156 and the coil end in the motor unit 10a, and the positional relationship between the branching piece 30 connected with the open end 158 and the coil end in the motor unit 10b are substantially similar to each other. In other words, even if the motor is rotated by 180 degrees (flipped upside down), the positional relationship between the coil end and an oil injection hole of the branching piece 30 stays substantially the same. Therefore, it is possible, with the motor units 10a and 10b, to supply oil to the coil ends in a similar fashion.

Since the speed reducers 14a, 14b communicate with the return oil path 38, it is possible to smoothly supply oil to the speed reducers 14a, 14b.

Both motors 12a, 12b, and therefore both motor units 10a, 10b, use identical stator housings 20, second motor covers 24 and covers 90. Therefore, it is possible to easily obtain the vehicle driving motor unit 5 including a plurality of the motor units 10a, 10b.

The vehicle driving motor unit 5 described above can be suitably utilized in the electric vehicle 1.

It should be noted here that in the motor unit 10a, the oil path 146 may communicate with the outward oil path 34 without the branching piece 30 placed in between. In other words, the open end 156 of the oil path 146 may communicate with the exit-side end portion of the first externally attached pipe 32 without the branching piece 30 placed in between. The oil path 144 may also communicate with the outward oil path 34 without the branching piece 30 placed in between.

In the motor unit 10b, the oil path 152 may communicate with the outward oil path 34 without the branching piece 30 placed in between. In other words, the open end 158 of the oil path 152 may communicate with the exit-side end portion of the first externally attached pipe 32 without the branching piece 30 placed in between. The oil path 150 may also communicate with the outward oil path 34 without the branching piece 30 placed in between.

The first pipe and the second pipe are not limited to the first externally attached pipe 32 and the second externally attached pipe 36 respectively, but they may be provided by pipes provided inside the cases 18a, 18b.

The present invention being thus far described in terms of preferred embodiments, it is obvious that these may be varied in many ways within the scope and the spirit of the present invention. The scope of the present invention is only limited by the accompanied claims.

### REFERENCE SIGNS LIST

1 Electric vehicle
5 Vehicle driving motor unit
10a, 10b Motor units
12a, 12b Motors
14a, 14b Speed reducers
16 Inverter
18a, 18b Cases
20 Stator housing
22a, 22b First motor covers
24 Second motor cover
30 Branching piece
32 First externally attached pipe
34 Outward oil path
36 Second externally attached pipe
38 Return oil path
40 Rotor
46 Rotor shaft
48 Rotor core
60 Stator
62 Stator core
64 Stator coil
90 Cover
92a, 92b Gaskets
94a, 94b, 96a, 96b Through-holes
100 Oil filter
126a, 126b Oil reservoirs
130 Oil pump
134a, 134b, 136a, 136b, 138a, 138b, 140a, 140b, 142b, 142b, 144, 146, 148, 150, 152, 154, 160, 162, 164, 166, 168a, 168b Oil paths
156, 158 Open ends of oil paths
A Axis of rotor

## Claims

1. A motor comprising:
a case including a stator housing, a first motor cover provided at an output side end portion of the stator housing, and a second motor cover provided at a non-output side end portion of the stator housing;
a first pipe having an outward oil path and held by the first motor cover and the second motor cover;
a second pipe having a return oil path, provided at a lower position than the first pipe and held by the first motor cover and the second motor cover;
a rotor provided inside the case and having a first oil path;
a stator provided inside the case and having a stator core provided radially outside the rotor and a stator coil provided in the stator core;
a cover provided outside the second motor cover; and
a gasket inserted between the second motor cover and the cover; wherein
the second motor cover includes a second oil path and a third oil path communicatable with the outward oil path;
the cover includes a fourth oil path provided between the first oil path and the second oil path, and a fifth oil path provided between the first oil path and the third oil path;
the gasket has a through-hole enabling either one of communication between the second oil path and the fourth oil path, or communication between the third oil path and the fifth oil path; and
the second oil path has an open end and the third oil path has an open end, respectively communicating with one and the other of an exit-side end portion of the first pipe and an inlet-side end portion of the second pipe.

2. The motor according to Claim 1, wherein
the second motor cover further includes a sixth oil path and a seventh oil path communicatable with the outward oil path for supplying oil to the stator coil; and
the sixth oil path is provided near the second oil path, and the seventh oil path is provided near the third oil path.

3. The motor according to Claim 2, further comprising a branching piece provided inside the second motor cover for dividing the oil from the outward oil path to the second oil path and the sixth oil path, or to the third oil path and the seventh oil path.

4. The motor according to one of Claims 1 through 3, wherein the open ends of the second oil path and the third oil path are in point symmetry to each other with respect to an axis of the rotor when viewed axially along the rotor.

5. A motor unit comprising:
the motor according to one of Claims 1 through 4; and
a speed reducer provided on a side of the first motor cover in order to slow down rotation of the rotor, and communicating with the return oil path.

6. A vehicle driving motor unit comprising a plurality of the motor unit according to Claim 5, wherein
the stator housing, the second motor cover and the cover in each of the motors are respectively provided by identical members.

7. An electric vehicle comprising the vehicle driving motor unit according to Claim 6.
